# EUROPÄISCHE PATENTSCHRIFT

(11) **EP 0 447 634 B1**
(45) Veröffentlichungstag und Bekanntmachung des Hinweises auf die Patenterteilung: **10.06.1998**
(21) Anmeldenummer: 90123505.1
(22) Anmeldetag: 07.12.1990
(51) Int. Cl.: G01F 11/26

(54) **Vorrichtung zur dosierten Ausgabe von Flüssigkeit**
Dosing-dispensing device for fluids
Dispositif doseur-dispenseur pour fluides

(30) Priorität: 17.03.1990 DE 4008645
(43) Veröffentlichungstag der Anmeldung: 25.09.1991
(73) Patentinhaber: Weener Plastik GmbH & Co. KG, D-26826 Weener (DE)
(72) Erfinder: Fudalla, Manfred, W-2950 Leer (DE)
(74) Vertreter: Müller, Enno, Dipl.-Ing.

(56) Entgegenhaltungen:
- EP-A- 68 181
- EP-A- 175 256

## Beschreibung

Die Erfindung bezieht sich auf eine Vorrichtung zur dosierten Ausgabe von Flüssigkeit gemäß den Merkmalen des Oberbegriffs des Patentanspruchs 1.

Eine Vorrichtung dieser Art ist durch die EP-PS 0 132 628 bekannt. Dort erfolgt die dosierte Ausgabe durch ein in die Tieflage tretendes Mündungsrohr hindurch; sie ergibt sich erst beim zweiten Umwenden. Dazu ist die von einem topfförmigen Gehäuse gebildete Vorrichtung mittels einer im wesentlichen quer verlaufenden Teilungswand in eine obere Kammer und eine tieferliegende Ausgußkammer unterteilt. Die Ausgußkammer und die obere Kammer sind über ein Durchflußloch miteinander verbunden. Die Speisung geschieht über eine Zulauföffnung in der oberen Kammer. Das Mündungsrohr endet oberhalb der Teilungswand. In der oberen Kammer ist überdies ein Luftdurchlaß ausgebildet. Das Ausgußrohr erstreckt sich unter Belassung des erforderlichen Strömungsweges nahezu bis auf den Boden eines die Ausgußkammer umgebenden Bechers. Das führt zu einer Doppelwandigkeit und somit Verteuerung der als typischer Massenartikel zu bezeichnenden Vorrichtung. Auch die Spritzform fällt relativ kompliziert aus.

Aufgabe der vorliegenden Erfindung ist es, eine gattungsgemäße Vorrichtung fertigungstechnisch vorteilhafter auszubilden, dies unter Beibehaltung bzw. sogar Erhöhung der Dosiergenauigkeit.

Gelöst ist diese Aufgabe durch die im Anspruch 1 angegebene Erfindung.

Die Unteransprüche sind vorteilhafte Weiterbildung der gattungsgemäßen Vorrichtung.

Zufolge solcher Ausgestaltung liegt eine vor allem fertigungsgünstigere Lösung vor. Der Materialaufwand läßt sich deutlich herabsetzen; die entsprechende Einsparung ist heute durchaus wieder von Interesse. Konkret schlägt die Erfindung dabei vor, daß das Mündungsrohr an der oberen Kammer angebracht ist, und daß die Ausgußkammer mit der oberen Kammer rastverbindbar ist. Bis auf die geringe Überlappungszone der Rastverbindung wird dabei jewede Doppelwandigkeit vermieden. Die entsprechende Zweiteiligkeit hat darüber hinaus aber auch Vorteile im Hinblick auf das Spritzverfahren. Die gegenläufige Zugänglichkeit der Kerne läßt auch eine strömungstechnisch optimale Struktur erreichen. Außerdem kann sogar auf unterschiedliche Materialien zurückgegriffen werden, etwa in dem Sinne, daß die Dichtungsbelange des in die Mündung eines Vorratsbehälters einsetzbaren Teiles, des Gehäuses nämlich, besser berücksichtigt werden, etwa dergestalt, daß es weicher gestaltet ist als beispielsweise der die Ausgußkammer bildende Becher oder umgekehrt, daß die mit dem Gehäuse zu verbindenn Ergänzungsteile der Vorrichtung weicher ausgebildet werden als das Gehäuse. In Bezug auf den separat erstellten Becher können bestimmte spezielle Formen besser erreicht werden. Andererseits läßt sich aber die Ausgußkammer in bestimmten Fällen sogar weglassen, so daß die Vorrichtung statt einer jeweils kippabhängigen Dosierung die Ausbringung eines ununterbrochenen Gießstrahls erlaubt. In Bezug auf die Rastverbindung wird natürlich auch jede artverwandte Zuordnung wie z. B. ein Aufprellen verstanden. Weiter bringt die Erfindung in Vorschlag, daß das Mündungsrohr mit der oberen Kammer einstückig ausgebildet ist. Auch das unterstützt das Ziel der Materialersparnis. Außerdem ergibt sich ein stabiler Übergang im Anbindungsbereich zwischen dem Mündungsrohr und dem Gehäuse der Vorrichtung. Weiter erweist es sich als vorteilhaft, daß Lüftungslöcher in der Seitenwand der oberen Kammer ausgebildet sind. Die in Mehrzahl vorgesehenen Lüftungslöcher vermeiden jedwede Schwächung der Seitenwand. Dadurch, daß weiter die Lüftungslöcher etwa auf halber Höhe der Seitenwand der oberen Kammer ausgebildet sind, ergibt sich eine rasche Flutung unter Evakuierung der Luft. Weiter wird vorgeschlagen, daß drei Lüftungslöcher nebeneinander angeordnet sind. Nebeneinander bedeutet auf gleicher Höhe sowie in Bereich neben der theoretischen Kippebene liegend. Dadurch bedarf es nicht einer peniblen Einhaltung der besagten Ebene. Überdies erweist es sich als vorteilhaft, daß ein zu den Zulauföffnungen hin führender Zulaufkanal durch eine Einbuchtung der Seitenwand der oberen Kammer nach innen gebildet zur Zusammenwirkung mit einem Hals des Vorratsbehälters. Die entsprechende Einbuchtung läßt sich formtechnisch ohne Schwierigkeit mitberücksichtigen, da sie nach außen hin offen ist und sich im wesentlichen in der Axialen des topfförmigen Gehäuses erstreckt. Der Topf kann dabei am Hals zumindest partiell anliegen oder aber sich radial spaltbeabstandet dazu erstrecken. In letzterem Falle würden seitliche Zulaufbereiche zum eigentlichen Zulaufkanal vorliegen, auch hier zur Unterstützung des Nutzens, nicht exakt in der theoretischen Kippebene der Vorrichtung arbeiten zu müssen. Darüber hinaus wird vorgeschlagen, daß die Zulauföffnungen in einer Ebene münden, die durch den oberen Rand der oberen Kammer gebildet ist. Dadurch sind Zulauföffnungen und Lüftungslöcher axial recht weit beabstandet; Zulauföffnungen und Lüftungslöcher liegen gewöhnlich auf diametral einander gegenüberliegenden Seiten. Außerdem erweist es sich als günstig, daß die Decke der oberen Kammer durch eine Schraubkappe gebildet ist, welche von dem Mündungrohr in dichter Anlage durchsetzt ist. Die auch in dieser Weise vorliegende Mehrteiligkeit erlaubt es, auf dichtungsspezifische Erfordernisse besonders günstig eingehen zu können, indem das eine Bauteil entsprechend "weicher" gestellt ist. Die dichtende Anlage kann auch hier durch Prellen erreicht werden. Weiter wird vorgeschlagen, daß an dem Mündungsrohr ein Orientierungsvorsprung angeordnet ist zum Zusammenwirken mit einer Orientierungsausnehmung der Schraubkappe. Das hat montagetechnische Vorteile, vor allem im Hinblick auf eine narrensichere Zuordnung der Teile zueinander. Konkret handelt es sich bezüglich des Orientierungsvorsprunges zweckmäßig um ein sich axial erstreckendes Orientierungsschwert. Letzteres kann sich praktisch über die gesamte Länge des Mündungsrohres erstrecken. Es wirkt dabei zugleich als Stabilisierungsrippe. Außerdem kann durch Ausbildung eines recht langen Orientierungsschwertes schon eine frühzeitige Ausrichtung von Schraubkappe und Gehäuse erfolgen.

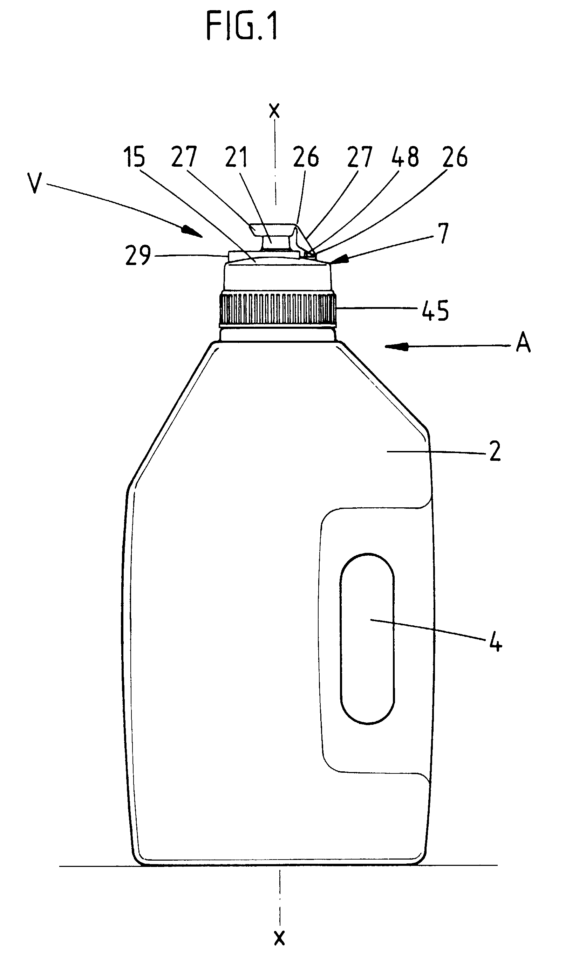

Der Gegenstand der Erfindung ist nachstehend anhand eines zeichnerisch veranschaulichten Ausführungsbeispieles näher erläutert. Es zeigt
- Fig. 1: die erfindungsgemäße Vorrichtung an einem Flüssigkeit enthaltenden Vorratsbehälter, und zwar in Seitenansicht,
- Fig. 2: eine Ansicht in Richtung des Pfeiles A in Fig. 1, vergrößert,

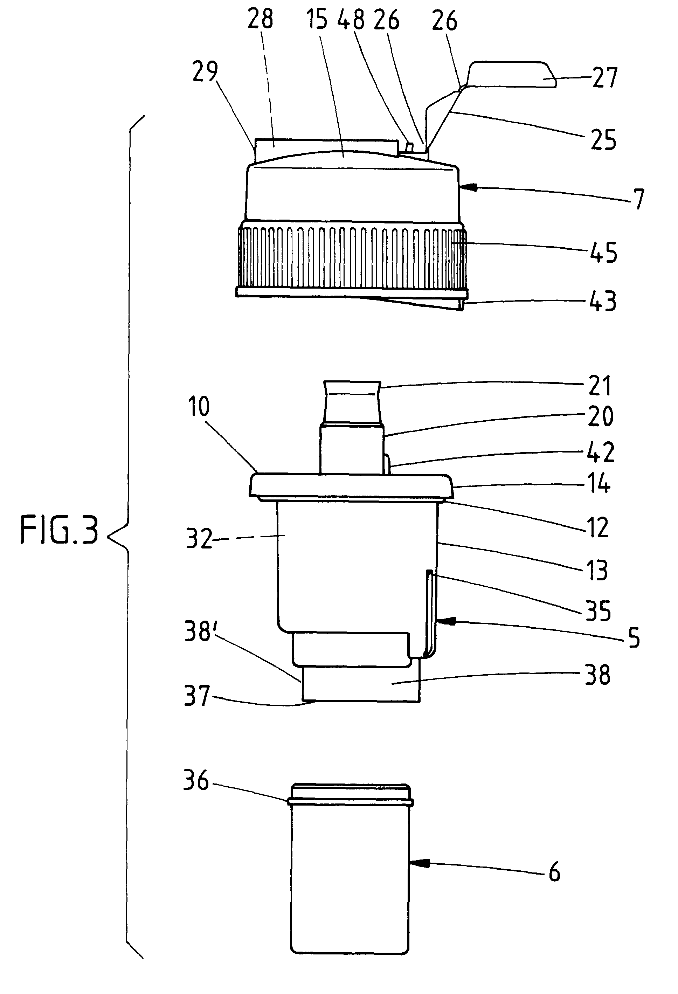

- Fig. 3: die aus drei Grundbauteilen bestehende Vorrichtung in Explosionsdarstellung,
- Fig. 4: einen Vertikalschnitt durch die zugeordnete Vorrichtung mit in der Kippebene liegendem Schnittverlauf,
- Fig. 5: die Vorrichtung in Ausgieß-Kippstellung unter Verdeutlichung der Flutungssituation,
- Fig. 6: eine Draufsicht auf das topfförmige Gehäuse der Vorrichtung,
- Fig. 7: eine Draufsicht auf die Schraubkappe der Vorrichtung bei geöffneter Verschlußlasche,
- Fig. 8: das topfförmige Gehäuse in Vorderansicht und
- Fig. 9: das topfförmige Gehäuse in Rückansicht.

Die erfindungsgemäße Vorrichtung V ist auf den Hals 1 eines Vorratsbehälters 2 aufgesetzt. Die daraus in abgemessenen Mengen auszugebende Flüssigkeit trägt das Bezugszeichen 3.

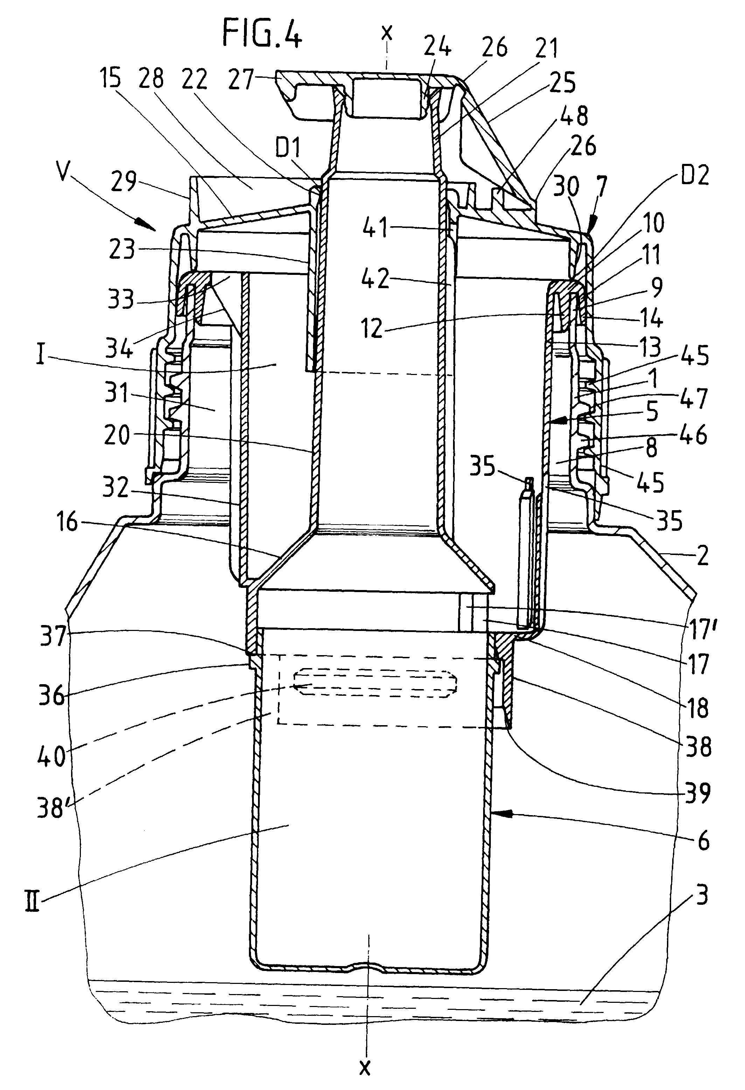

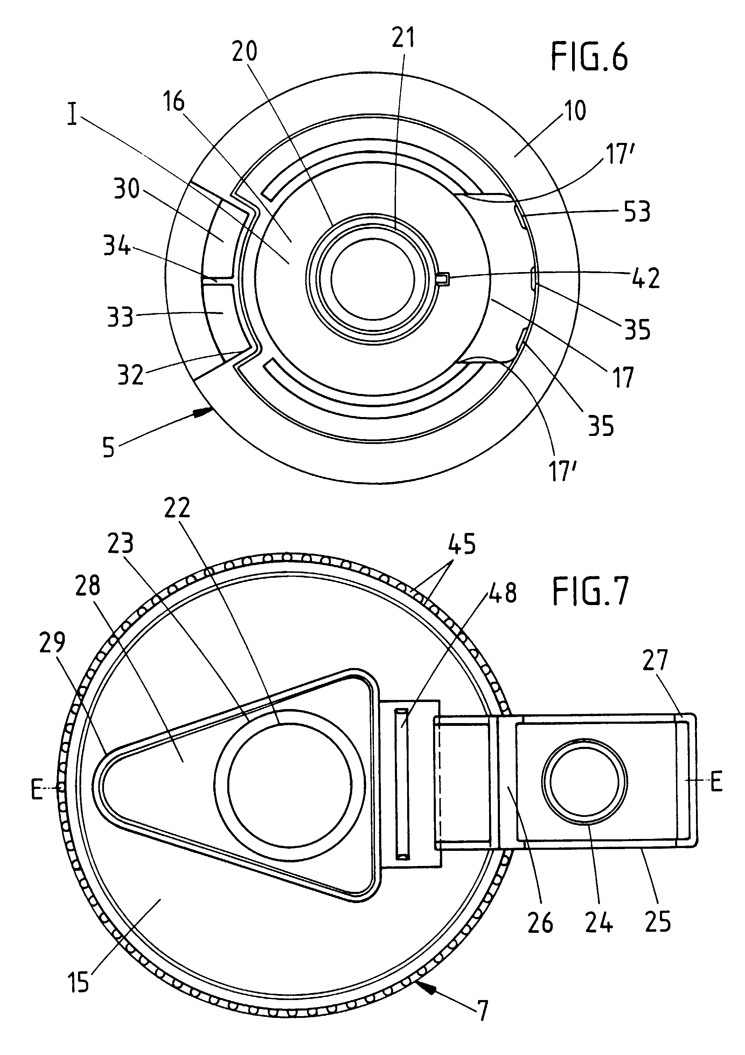

Der Vorratsbehälter 2 formt eine Greifhöhlung 4. Letztere befindet sich extern zur Längsmittelachse x-x der Vorrichtung V und veranlaßt so zwingend die Einhaltung einer bestimmten Kipprichtung des Ganzen. Die entsprechende Gießebene fällt mit dem Schnittverlauf in Fig. 4 zusammen und ist in Fig. 7 mit E-E bezeichnet. Die seitliche Greiföffnung 4 läßt einen brückenförmigen Griff entstehen.

Die dargestellte Vorrichtung V besteht aus drei separat hergestellten Bauteilen, nämlich einem topfförmigen Gehäuse 5, einem Becher 6 und einer Schraubkappe 7. Gehäuse 5 und Becher 6 bestehen aus HDPE, (Polyäthylen-hart), die Schraubkappe 7 aus PP (Polypropylen).

Das topfförmige Gehäuse 5 ist in die im wesentlichen zylindrische Höhlung 8 des Halses 1 randübergreifend eingehängt. Der diesbezügliche Stirnrand des Halses 1 trägt das Bezugszeichen 9. Im Gegenzug formt ein nach auswärts gerichteter Gehäuserand 10 eine nach unten hin offene, sich bodenseitig verjüngende, abdichtend und klemmend wirkende Stecknut 11. Die innere Ringwand 12 der besagten Stecknut 11 hebt von der Mantelfläche der Seitenwand 13 des Gehäuses 5 ab. Sie ist daher besonders flexibel. Die periphere Ringwand 14 dagegen führt sich dichtend an der Innenwandung der erwähnten Schraubkappe 7.

Die Schraubkappe 7 bildet mit ihrer Decke 15 den oberen Abschluß einer oberen Kammer I, und zwar deutlich axial beabstandet zum Stirnrand 9 respektive Gehäuserand 10.

Unterhalb der oberen Kammer I liegt eine Ausgußkammer II. Diese tieferliegender, koaxial zur Kammer I angeordnete Ausgußkammer ist über eine im wesentlichen quer zur Längsmittelachse x-x der Vorrichtung V verlaufende Teilungswand 16 räumlich getrennt aber strömungstechnisch verbunden. Die entsprechende Verbindung schafft ein seitlich liegendes, relativ großes Durchflußloch 17 im Bereich des ringförmigen Bodens 18 des Gehäuses 5. Dort ist, wie aus Fig. 4 ersichtlich, die domförmig gestaltete, genauer gesagt als Trichter realisierte Teilungswand 16 folglich durchbrochen. Die Trichterwandung, d. h. die Teilungswand 16 erstreckt sich in einem Winkel von 45° zu einer Horizontalen, beispielsweise zum Boden 18. Das Durchflußloch 17 liegt auf der der Greifhöhlung 4 zugewandten Seite der Vorrichtung.

Die Basisebene der kegelstumpfförmigen bzw. domartig gestalteten Teilungswand 16 liegt becherseitig; der verjüngte Bereich der Teilungswand geht dagegen in ein nach oben gerichtetes, dem Gehäuse 5 gleich angeformtes Mündungsrohr 20 über. Besagtes Mündungsrohr 20 ist strömungstechnisch angeschlossen in direkter axialer Ausrichtung bzw. koaxialer Ausrichtung an die Ausgußkammer 20 und mittelbar an die obere Kammer I. Über das Mündungsrohr 20 wird durch Kippen der Vorrichtung V in eine Tieflage die Flüssigkeit 3 dosiert ausgebracht, und zwar erst beim zweiten Umwendung und bei annähernder Einhaltung der Gießebene E-E.

Das zentral liegende Mündungsrohr 20 überragt mit einer etwas querschnittsreduzierten, bei Nichtgebrauch stopfenverschließbaren Gießtülle 21 die Oberseite der Decke 15 der Schraubkappe 7. Das Mündungsrohr 20 durchsetzt eine entsprechend zentralliegende Durchbrechung 22 der Decke 15. Der wulstartig ausgestaltete Durchbrechungsrand liegt dabei dichtend an der nach außen hin schwach konisch zulaufenden Mantelwand des Mündungsrohres 20 an. Diese Dichtstelle ist mit D1 bezeichnet.

Die Durchbrechung 22 liegt etwas oberhalb der Oberseite der Decke 15, da sie an einem entsprechend überragenden Stutzen 23 der Schraubkappe 7 ausgebildet ist. Der größere axiale Längenabschnitt des Stutzens 23 erstreckt sich jedoch in das Innere der oberen Kammer I in enger Umfassungslage des Mündungsrohres 20. Es wird etwa die halbe Länge des Mündungsrohres 20 auf diese Weise ummantelt.

Der verschließend in die Gießtülle 21 eingeschnäpperte Stopfen 24 sitzt an einem Gliederband 25. Dieses ist über ein Filmscharnier 26 an der Oberseite des aus dem weicheren Kunststoffmaterial (PP) bestehenden Schraubdekkels 7 gleich angeformt. Auch die zwischen den Gliedern liegenden Filscharniere tragen das Bezugszeichen 26. Das den eigentlichen, als Hohlstopfen gestalteten Stopfen 24 tragende Endglied setzt sich in eine freistehende Greiflasche 27 fort.

Die schornsteinartig überstehende Gießtülle 21 ist von einer einen Tropfenfänger 28 umschreibenden Ringwand 29 umgeben, welche in Gießrichtung ausspitzt. Die Ausspitzzone reicht nahezu bis an den Rand der Schraubkappe 7. Sie ist dreieckigen Grundrisses und bildet außenseitig der Schraubkappe zugleich eine Stabilisierungsrippe.

In Gegenrichtung, also an der Unterseite der Decke 15 der Schraukappe 7 sitzt freistehend angeformt und nach unten gerichtete eine schneidenartig ausspitzende Ringwand 30 an. Letztere bildet mit der Oberseite des Gehäuserandes 10 eine zweite Dichtungsstelle D2 der oberen Kammer I.

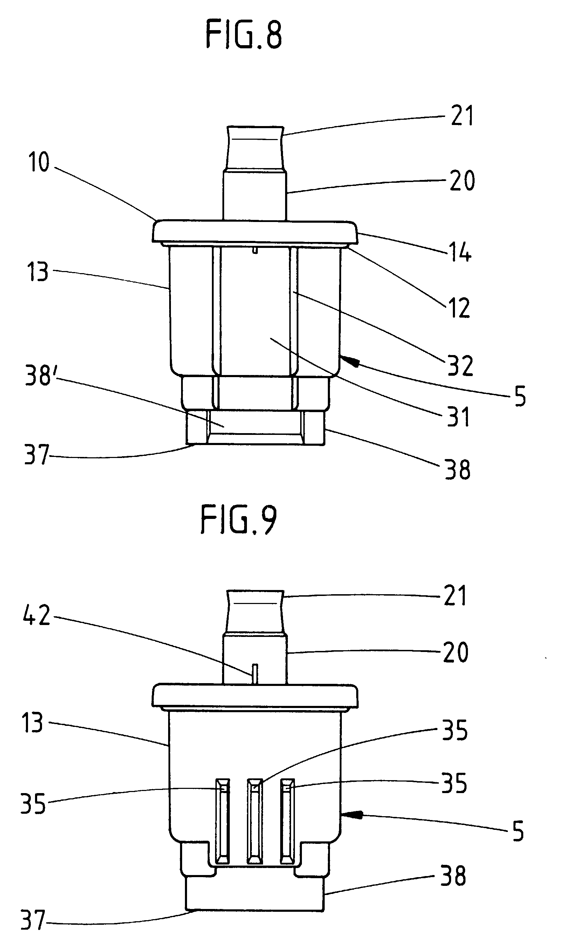

Den Eintritt der zu dosierenden Flüssigkeit 3 in das Innere der Vorrichtung V gibt ein Zulaufkanal 31 frei. Letztere wird von einer längsgerichteten Einbuchtung 32 der Seitenwand 13 der oberen Kammer I gebildet. Die nach innen gerichtete Einbuchtung 32 geht besonders deutlich aus den Fig. 6 und 8 hervor. Sie bringt für die Kammer I eine partielle Ringkammereinengung, und zwar auf der dem Durchflußloch 17 abgewandten Seite des Gehäuses 5. Die periphere Begrenzung des Zulaufkanals 31 bildet dabei der Hals 1 respektive seine Höhlung 8. Allerdings braucht zufolge der Ringwand 12 die Seitenwand 13 nicht berührend an der korrespondierenden Innenwandung der Höhlung 8 anzuliegen, so daß der axial orientierte Zulaufkanal 31 noch einen ringkammerartig wirkenden Zulaufbereich aufweist.

Oben, d. h. schraubkappenseitig geht der Zulaufkanal 31 in von Durchbrechungen des Gehäuserandes 10 gebildete Zulauföffnungen 33 über, separiert durch eine axial und radial ausgerichtete Scheidewand 34. Letztere bildet zugleich eine Materialbrücke zwischen der Einbuchtung 32 und dem stabilen Rand 10. Die Scheidewand keilt etwa auf Höhe des unteren Randes der Ringwand 12 an der Seitenwand 13 aus. Die Zulauföffnungen 33 bilden einen sich über 60° erstreckenden Schlitz; die Scheidewand 34 erstreckt sich in der Gießebene E-E.

Den Zulauföffnungen 33 diametral gegenüberliegend befinden sich in der Seitenwand 13 der oberen Kammer I Lüftungslöcher 35. Es handelt sich um kleine fensterartige Durchbrechungen, die sich form- bzw. spritztechnisch einfach durch Wandungsversatz leicht, d. h. querschieberfrei erzeugen lassen. Insgesamt sind drei solcher Lüftungslöcher 35 nebeneinander liegend vorgesehen. Sie liegen auf eine Horizontalebene, und zwar ebenfalls auf einem Winkelbereich von ca. 60° verteilt. Die mittlere Lüftungsöffnung 35 verläuft in der Gießebene E-E. Räumlich gesehen erstrecken sie sich etwa auf halber Höhe der Seitenwand 13 der oberen Kammer I. Die gleich beabstandeten, äußeren Lüftungslöcher fluchten etwa mit dem Rand 17' des auf der gleichen Seite liegenden schlitzförmigen Durchflußloches 17.

Der die Ausgußkammer II bildende Becher 6 steht in lösbarer Rastverbindung zum Gehäuse 5. Er weist dazu eine auf seine Mantelwand angeordnete, durchgehend umlaufende Rastrippe 36 auf. Letztere tritt mit Ihrer gehäuseseitigen Flanke gegen eine vom Boden 18 gebildete Ringschulter 37. Die Ringschulter 37 wird noch von einem schürzenartigen, nach unten gerichteten Vorsprung 38 überragt. Dessen Innenkante ist gefast, so daß eine Art zentrierend wirkender Fangtrichter 39 vorliegt, welcher den Becherrand in die rastgerechte Lage lenkt. Innenseitig des schürzenartigen, zulaufkanalseitig aber spaltoffenen Vorsprunges liegen zwei oder drei Gegenrastrippen 40. Diese werden von der Rastrippe 36 überlaufen, wobei die Rast zuordnung sich relativ leicht ergibt zufolge der axialen Unterbrechung 38' des als Ringwand realisierten Vorsprunges 38.

Der Rand des Bechers 6 schließt ebenengleich mit der Oberseite des Bodens 18 ab.

Um die funktionsgerechte Ausrichtung der Schraubkappe 7 zum Gehäuse 5 sicherzustellen, ist der die Dichtstelle D1 bildende Stutzen 23 der Schraubkappe 7 dahingehend weitergebildet, daß er eine Orientierungsausnehmung 41 ausbildet, in welche ein sich über die ganze Länge des Mündungsrohres 20 erstreckender Orientierungsvorsprung 42 formpassend eingreift. Bezüglich der Orientierungsausnehmung handelt es sich um einen vom unteren, freien Ende des Stutzens 23 ausgehenden, bis vor die Unterseite der Decke 15 reichenden Längsschlitz, in den der in Form eines Orientierungsschwerts gestaltete Orientierungsvorsprung 42 die beiden Teile gegen drehende Verlagerung zueinander sichernd eintritt. Das untere Ende des Längsschlitzes kann deltaförmig öffnen, das obere Ende des Orientierungsvorsprunges unter Bildung einer Auflaufschräge gestaltet sein, wie letzteres aus Fig. 4 erkennbar ist.

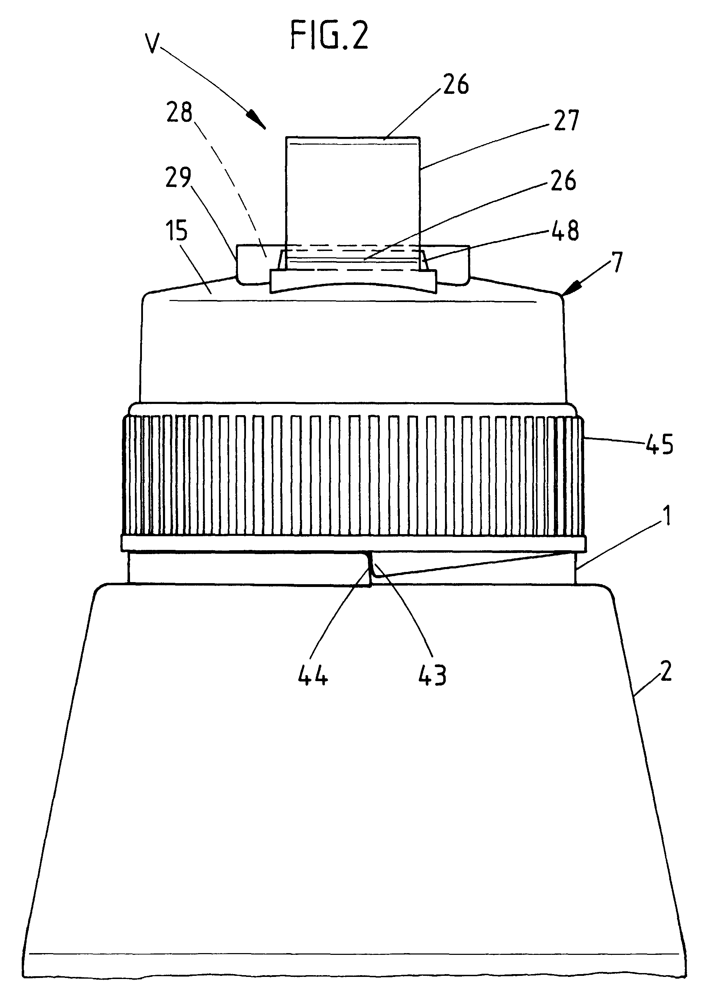

Um das Ganze auch in Bezug auf den Vorratsbehälter 2 zu orientieren, bildet die Schraubkappe 7, wie aus Fig. 2 ersichtlich, einen den unteren Rand der Kappe noch überragenden Anschlaglappen 43 aus, welcher in Drehendstellung gegen eine ortsfeste Vertikalstufe 44 am Fuß des Halses 1 tritt.

Zur Aufbringung genügend hoher Schraubkräfte ist der glockenrandartig ausgestellte Bereich der Schraubkappe 7 gerauht, insbesondere längsgerieft. Die Riefen tragen das Bezugszeichen 45. Der entsprechend ausgestellte Wandungsabschnitt wird innenseitig der Schraubkappe zur Anformung eines Innengewindes 46 genutzt, welches mit korrespondierendem Außengewinde 47 des Halses 1 zusammenwirkt.

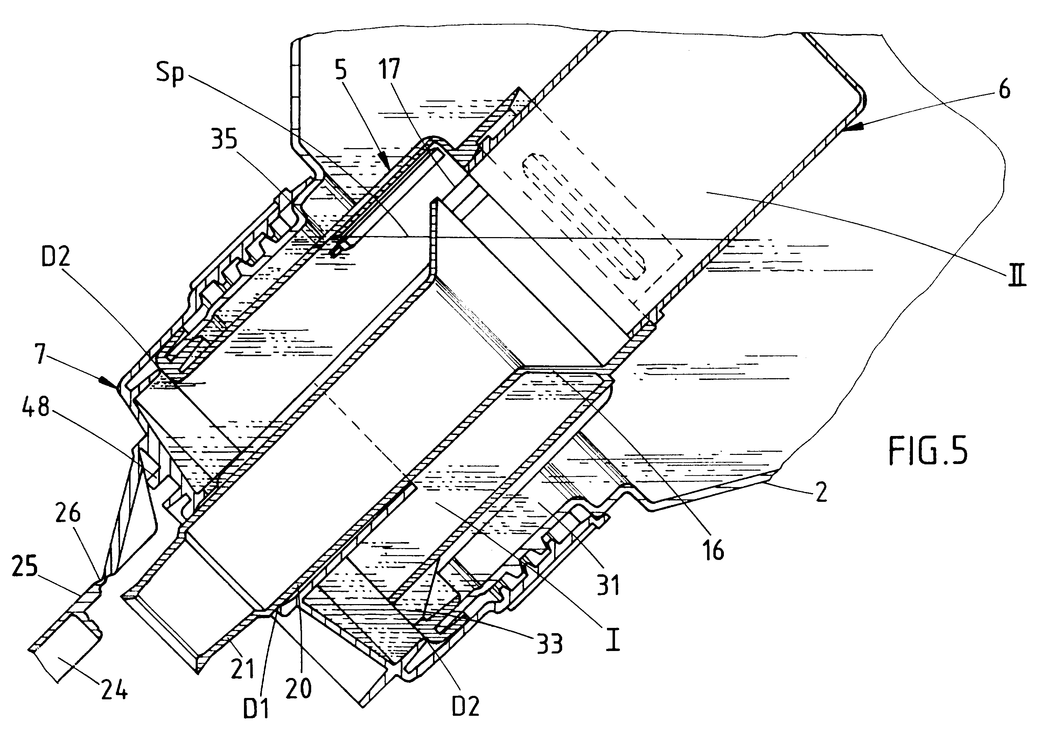

Die Funktion der beschriebenen Vorrichtung ist wie folgt:
Der mit der erfindungsgemäßen Vorrichtung V bestückte Vorratsbehälter 2 wird nach Ziehen des deckelartigen Stopfens 24 in die aus Fig. 5 ersichtliche Kipplage gebracht, so daß das Mündungsrohr 20 deutlich nach unten weist (beispielsweise in einem 45°-Neigungswinkel). Hierbei stürzt über den Zulaufkanal 31 unter Passieren der Zulauföffnungen 33 Flüssigkeit 3 in die sogenannte obere Kammer I. Im Nu ist diese Kammer geflutet. Der Druckausgleich in der oberen Kammer I findet dabei über die Lüftungslöcher 35 statt. Die Oberkante dieser Lüftungslöcher 35 begrenzt auch die Füllmenge (vgl. den in Fig. 5 eingetragenen Spiegel Sp) innerhalb der Vorrichtung V.

Nach diesem ersten Kippen in die Tieflage wird die Vorrichtung V wieder so gestellt, wie es sich aus Fig. 4 ergibt. In dieser normalen Standlage fließt die in die obere Kammer I gelangte Flüssigkeit 3 über das Durchflußloch 17 in die Ausgaußkammer II. Überschüssige Flüssigkeit 3 läuft aus der oberen Kammer I über die Lüftungslöcher 35 in den Restvorrat der Flüssigkeit 3 zurück.

Nun wird die Vorrichtung V respektive der Vorratsbehälter 2 erneut in die Kipplage gemäß Fig. 5 überführt. Dabei wird die in die Ausgußkammer II gelangte, dosierte Flüssigkeitsmenge durch das zentrale Mündungsrohr 20 hindurch ausgegeben. Da die entsprechende Kippbewegung richtungsgebunden ist, kann die Flüssigkeit nicht über das oben liegende Durchflußloch 17 herausschwappen. Die domartige bzw. kegelstumpfartige Trichtergestalt der Teilungswand 16 wirkt wie ein Prall- bzw. Leitblech.

Soll die Ausgabe undosiert bzw. unter Nutzung eines schmalen Gießstrahles über das Mündungsrohr 20 bewirkt werden, so braucht lediglich Becher 6 von der Vorrichtung V abgezogen zu werden. Die Flüssigkeit tritt dann ohne Durchlaufen eines Z-förmigen Kanales ummittelbar aus.

Aber auch hier läßt sich eine restfreie Ausgabe bewirken, wenn in der Endphase der Becher 6 wieder aufgesteckt wird.

Eine im Bereich des kappennahen Filmscharniers 26 liegende Anschlagleiste 48 bringt einen definierten Schwenkstop des Gliederbandes 25, insbesondere seines Endgliedes, welches den Stopfen 24 trägt.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Vorrichtung (V) zur dosierten Ausgabe von Flüssigkeit (3) aus einem Vorratsbehälter (2) durch ein in die Tieflage tretendes Mündungsrohr (20) hindurch, welche Ausgabe erst beim zweiten Umwenden erfolgt, wobei ein von einer Teilungswand (16) in eine obere Kammer (1) und eine tiefer liegenden Ausgußkammer (II) unterteiltes topfförmiges Gehäuse (5) vorgesehen ist, dessen Ausgußkammer (II) und obere Kammer (I) über ein Durchflußloch (17) miteinander verbunden sind, mit einer Zulauföffnung (33) in der oberen Kammer (I), und welches Mündungsrohr (20) oberhalb der Teilungswand (16) mündet, wobei im Bereich der oberen Kammer (I) ein Luftdurchlaß ausgebildet ist und das Mündungsrohr (20) an der oberen Kammer (I) angebracht ist dadurch gekennzeichnet, daß daß das Mündungsrohr (20) einen nach unten ragenden Schürzenartigen Vorsprung (38) aufweist, welcher eine Rastaufnahme ausbildet zur Rastbefestigung der Ausgußkammer (II), daß die Wände des Mündungsrohres (20) und der Ausgußkammer (II), zu wesentlichen nicht Überlappend ausgebildet sind und daß die Ausgußkammer (II) ein wandig ausgebildet ist.

2. Vorrichtung nach Anspruch 1, dadurch gekennzeichnet, daß das Mündungsrohr (20) mit der oberen Kammer (I) einstückig ausgebildet ist.

3. Vorrichtung, nach einem oder mehreren der vorhergehenden Ansprüche, dadurch gekennzeichnet, daß Lüftungslöcher (35) in der Seitenwand (13) der oberen Kammer (I) ausgebildet sind.

4. Vorrichtung nach einem oder mehreren der vorhergehenden Ansprüche, dadurch gekennzeichnet, daß die Lüftungslöcher (35) etwa auf halber Höhe der Seitenwandung (13) der oberen Kammer (I) ausgebildet sind.

5. Vorrichtung nach einem oder mehreren der vorhergehenden Ansprüche, dadurch gekennzeichnet, daß drei Lüftungslöcher (35) nebeneinander angeordnet sind.

6. Vorrichtung nach einem oder mehreren der vorhergehenden Ansprüche, dadurch gekennzeichnet, daß ein zu den Zulauföffnungen (33) hinführender Zulaufkanal (31) durch eine Einbuchtung (32) der Seitenwand (13) der oberen Kammer (I) nach innen gebildet ist zur Zusammenwirkung mit einem Hals (1) des Vorratsbehälter (2).

7. Vorrichtung nach einem oder mehreren der vorhergehenden Ansprüche, dadurch gekennzeichnet, daß die Zulauföffnungen (33) in einer Ebene münden, die durch den oberen Rand der oberen Kammer (I) gebildet ist.

8. Vorrichtung nach einem oder mehreren der vorhergehenden Ansprüche, dadurch gekennzeichnet, daß die Decke (15) der oberen Kammer (I) durch eine Schraubkappe (7) gebildet ist, welche von dem Mündungsrohr (20) in dichtender Anlage (Dichtungsstelle D1) durchsetzt ist (Durchbrechung 22).

9. Vorrichtung nach einem oder mehreren der vorhergehenden Ansprüche, dadurch gekennzeichnet, daß an dem Mündungsrohr (20) ein Orientierungsvorsprung (42) angeordnet ist zur Zusammenwirkung mit einer Orientierungsausnehmung (41) der Schraubkappe (7).

10. Vorrichtung nach einem oder mehreren der vorhergehenden Ansprüche, dadurch gekennzeichnet, daß der Orientierungsvorsprung (42) ein sich axial erstreckendes Orientierungsschwert ist.

11. Vorrichtung nach einem oder mehreren der vorhergehenden Ansprüche, dadurch gekennzeichnet, daß die Teilungswand (16) domartig ausgebildet ist und sich in ihrem verjüngten Bereich in das Mündungsrohr (20) fortsetzt.

## Claims

1. Device (V) for measured discharge of liquid (3) from a supply container (2) through a mouthpiece tube (20) penetrating into the interior position, said discharge only being effected upon the second reversal, there being provided a cup-shaped housing (5) sub-divided by a dividing wall (16) into an upper chamber (I) and a lower situated outlet chamber (II), the outlet chamber (II) and upper chamber (I) of which are connected together through a flow aperture (17) with an admission opening (33) in the upper chamber (I) and said mouthpiece tube (20) opening above the dividing wall (16), an air passage being formed in the area of the upper chamber (I), and the mouthpiece tube (20) being attached at the upper chamber (I), characterised in that the mouthpiece tube (20) has a downwardly-projecting skirt-like projection (38), which forms a notch receiving means for snap-in attachment of the outlet chamber (II), in that the walls of the mouthpiece tube (20) and of the outlet chamber (II) are substantially designed not to overlap, and in that the outlet chamber (II) is of a one-walled construction.

2. Device according to claim 1, characterised in that the mouthpiece (20) is formed integrally with the upper chamber (I).

3. Device according to one or more of the preceding claims, characterised in that ventilation holes (35) are formed in the side wall (13) of the upper chamber (I).

4. Device according to one or more of the preceding claims, characterised in that the ventilation holes (35) are formed at roughly half the height of the side wall (13) of the upper chamber (I).

5. Device according to one or more of the preceding claims, characterised in that three ventilation holes (35) are located next to one another.

6. Device according to one or more of the preceding claims, characterised in that an admission channel (31) leading to the admission openings (33) is formed by an inward indentation (32) of the side walls (13) of the upper chamber (I), in order to co-operate with a neck (1) of the supply container (2).

7. Device according to one or more of the preceding claims, characterised in that the admission openings (33) open into a plane which is formed by the upper edge of the upper chamber (I).

8. Device according to one or more of the preceding claims, characterised in that the lid (15) of the upper chamber (I) is formed by a screw cap (7) which is penetrated (aperture 22) in sealing contact (sealing point D1) by the mouthpiece tube (20).

9. Device according to one or more of the preceding claims, characterised in that there is located on the mouthpiece tube (20) a positioning projection (42) which co-operates with the position recess (41) in the screw cap (7).

10. Device according to one or more of the preceding claims, characterised in that the positioning projection (42) is an axially extending positioning blade.

11. Device according to one or more of the preceding claims, characterised in that the dividing wall (16) is dome-shaped and continues in its tapered area into the mouthpiece tube (20).

## Revendications

1. Dispositif (V) pour une alimentation en liquide (3) par doses à partir d'un réservoir (2) par un tube d'embouchure (20) pénétrant en position profonde dans le réservoir, l'alimentation étant réalisée ensuite par un deuxième retournement, un boîtier (5) en forme de pot étant prévu et étant subdivisé par une paroi de subdivision (16) en une chambre supérieure (I) et en une chambre de déversement (II) située plus profondément, la chambre de déversement (II) et la chambre supérieure (I) du boîtier étant reliées l'une à l'autre par un trou de passage (17), une ouverture d'écoulement (33) étant prévue dans la chambre supérieure (I) et le tube d'embouchure (20) débouchant au-dessus de la paroi de séparation (16), tandis que dans la zone de la chambre supérieure (1) est formé un passage d'aération et que le tube d'embouchure (20) est placé dans la chambre supérieure, caractérisé en ce que le tube d'embouchure (20) comporte une partie en saillie (38) faisant saillie vers le bas en forme de jupe, et qui constitue un récepteur de verrouillage pour la fixation verrouillée de la chambre de déversement (II), en ce que les parois du tube d'embouchure (20) et de la chambre de déversement (II) sont réalisées en ne se recouvrant sensiblement pas, et en ce que la chambre de déversement (II) est réalisée à une seule paroi.

2. Dispositif selon la revendication 1, caractérisé en ce que le tube d'embouchure (20) est réalisé monobloc avec la chambre supérieure (I).

3. Dispositif selon l'une ou plusieurs des revendications précédentes, caractérisé en ce que des trous d'aération (35) sont réalisés dans la paroi latérale (13) de la chambre supérieure (I).

4. Dispositif selon l'une ou plusieurs des revendications précédentes, caractérisé en ce que les trous d'aération (35) sont réalisés sensiblement à mi-hauteur de la paroi latérale (13) de la chambre supérieure (I).

5. Dispositif selon l'une ou plusieurs des revendications précédentes, caractérisé en ce que trois trous d'aération (35) sont disposés les uns à côté des autres.

6. Dispositif selon l'une ou plusieurs des revendications précédentes, caractérisé en ce qu'un canal d'écoulement (31) conduisant aux ouvertures d'écoulement (33) est formé par une partie enfoncée vers l'intérieur (32) de la paroi

7. Dispositif selon l'une ou plusieurs des revendications précédentes, caractérisé en ce que les ouvertures d'écoulement (33) débouchent dans un plan, qui est formé par le bord supérieur de la chambre supérieure (I).

8. Dispositif selon l'une ou plusieurs des revendications précédentes, caractérisé en ce que le couvercle (15) de la chambre supérieure (I) est formé par un capuchon à vis (7), qui est traversé par le tube d'embouchure (20) en installation étanche (zone d'étanchéité D1) (passage transversal 22).

9. Dispositif selon l'une ou plusieurs des revendications précédentes, caractérisé en ce que, sur le tube d'embouchure (20), est disposée une partie en saillie d'orientation (42) destinée à coopérer avec une cavité d'orientation (41) du capuchon vissé (7).

10. Dispositif selon l'une ou plusieurs des revendications précédentes, caractérisé en ce que la partie en saillie d'orientation (42) est un ergot d'orientation s'étendant axialement.

11. Dispositif selon l'une ou plusieurs des revendications précédentes, caractérisé en ce que la paroi de séparation (16) est réalisée en forme de dôme et se prolonge par une zone conique dans le tube d'embouchure (20).
